# NEUE EUROPÄISCHE PATENTSCHRIFT

(11) **EP 3 658 980 B2**
(45) Veröffentlichungstag und Bekanntmachung des Hinweises auf die Entscheidung über den Einspruch: **26.03.2025**
(45) Hinweis auf die Patenterteilung: 28.07.2021
(21) Anmeldenummer: 18732125.2
(22) Anmeldetag: 26.06.2018
(51) Int. Cl.: G02F 1/1334, G02F 1/17

(54) **FAHRZEUGSCHEIBE MIT PDLC-FILM MIT DEFINIERTER TRÖPFCHENGRÖSSENVERTEILUNG ZUR VERRINGERUNG DES CORONAEFFEKTS**
VEHICLE PANE WITH PDLC FILM WITH DEFINED DROPLET SIZE DISTRIBUTION FOR REDUCING THE CORONA EFFECT
VITRE DE VÉHICULE POURVUE D'UN FILM PDLC À DISTRIBUTION GRANULOMÉTRIQUE DE GOUTTELETTES DÉFINIE PERMETTANT DE RÉDUIRE L'EFFET CORONA

(30) Priorität: 27.07.2017 EP 17183421
(43) Veröffentlichungstag der Anmeldung: 03.06.2020
(73) Patentinhaber: SAINT-GOBAIN GLASS FRANCE, 92400 Courbevoie (FR)
(72) Erfinder: LABROT, Michael, 52072 Aachen (DE); MANZ, Florian, 52064 Aachen (DE); DO ROSARIO, Jefferson, 52064 Aachen (DE)
(74) Vertreter: Gebauer, Dieter Edmund
(86) Internationale Anmeldenummer: PCT/EP2018/067069
(87) Internationale Veröffentlichungsnummer: WO 2019/020298

(56) Entgegenhaltungen:
- WO-A1-2009/000521
- WO-A1-2016/008375
- DE-A1- 102013 214 249
- DE-U1- 202013 006 516
- US-A1- 2015 301 366

## Beschreibung

Die Erfindung betrifft eine Fahrzeugscheibe, deren Lichtdurchlässigkeit durch Anlegen einer elektrischen Spannung veränderbar ist, insbesondere ist sie zwischen einem transparenten Zustand und einem trüben oder opaken Zustand umschaltbar.

Solche Scheiben, auch als PDLC-Glas (engl. smart glazing) oder Intelligentes Glas bezeichnet, enthalten eine PDLC-Schicht (PDLC = polymer dispersed liquid crystal) als aktive Schicht, durch die die Scheibe zwischen einem transparenten Zustand und einem trüben oder opaken Zustand umschaltbar ist.

Die PDLC-Schicht umfasst eine Polymermatrix, in der Flüssigkristalltröpfchen eingebettet sind, die sich zwischen zwei transparenten elektrisch leitenden Schichten (Elektroden) befindet und an die ein elektrisches Feld angelegt werden kann. Ohne elektrisches Feld sind die Flüssigkristalltröpfchen nicht ausgerichtet, was zum trüben oder opaken Zustand der Scheiben führt. Bei Anlegen eines elektrischen Feldes werden die Flüssigkristalltröpfchen in gleicher Richtung ausgerichtet und die die PDLC-Schicht wird transparent. Der Vorgang ist reversibel.

PDLC-Glas findet z.B. als Fenster für Bauwerke Verwendung. Bei Gebäuden werden in der Regel mehrere dicke Scheiben von z.B. 6 mm verwendet. Üblich sind Systeme mit drei Scheiben, die durch einen Hohlraum separiert sind. PDLC-Schichten können bei solchen Scheiben zwischen einer klassischen Scheibe und einer zusätzlichen Scheibe laminiert werden, auf einer inneren Scheibe aufkaschiert werden oder retrofit auf die Innenseite aufkaschiert werden.

Scheiben aus PDLC-Glas sind auch für Fahrzeuge interessant, beispielsweise in einem Schiebedach, als Glasdach, als Heckscheibe oder als hintere Seitenscheibe. Im trüben oder opaken Zustand kann die PDLC-Scheibe direkte Sonnenstrahlung abhalten und die Privatsphäre schützen.

Ein Nachteil bei PDLC-Schichten enthaltenden Fahrzeugscheiben bzw. Scheiben besteht aber darin, dass sich im transparenten Zustand der Scheibe ein relativ starker Coronaeffekt ausbilden kann, wenn Licht einer Lichtquelle, gewöhnlich die Sonne, durch die Scheibe fällt. Hierbei bildet sich ein als Corona bezeichnetes konzentrisches Ringmuster um die Lichtquelle. Der zentrale helle Bereich der Corona, auch als Aureole bezeichnet, sieht wie eine bläulich-weiße Scheibe aus, die zum Rand hin zu rötlich braun verblasst. Am äußeren Rand der Corona nimmt der Betrachter mitunter die Farben des Regenbogens wahr, was auch als Regenbogeneffekt bezeichnet wird. Bei Fahrzeugscheiben spielen diese Effekte aufgrund des geringen Betrachterabstands und der für Fahrzeuge häufig gewünschten Tönung der Scheibe eine ausgeprägte Rolle. Bei anderen Anwendungen von Scheiben mit PDLC-Schichten, z.B. als Fenster in Bauwerken, sind die Effekte eher vernachlässigbar.

Wenn der Betrachter einen weiten Abstand von der Fahrzeugscheibe hat, ist die Corona weniger sichtbar. Der Coronaeffekt im transparenten Zustand der Fahrzeugscheibe ist aber ausgeprägt, wenn der Betrachter sich nahe an der PDLC-Scheibe befindet. Der Effekt ist sogar noch stärker, wenn die PDLC-Scheibe geneigt ist. Für Fahrzeuginsassen ist der Effekt daher störend, da sie sich nahe an der Fahrzeugscheibe, z.B. einem Schiebedach, befinden. Beim Blick durch ein Schiebedach oder Glasdach in Richtung Sonne ist zudem der Blickwinkel geneigt, was die Situation weiter verschärft. Die Farberscheinungen der Corona wirken für die Fahrzeuginsassen ebenfalls störend.

Eine andere bekannte Technik zur Bereitstellung von Scheiben, die zwischen einem transparenten Zustand und einem trüben oder opaken Zustand umschaltbar sind, ist die SPD-Technologie, bei der eine SPD-Schicht (SPD = suspended particle device) als aktive Schicht in der Scheibe enthalten ist. Bei SPD-Schichten wird in der Regel kein opaker Zustand erreicht. Das Prinzip ist ähnlich wie bei den PDLC-Schichten, außer dass bei der SPD-Schicht nicht Flüssigkristalltröpfchen, sondern Suspensionströpfchen, in denen Licht polarisierende Partikel suspendiert sind, in einer Polymermatrix eingebettet sind. Solche Systeme werden z.B. in der EP 0551138 A1 beschrieben. Auch bei SPD-Schichten enthaltenden Scheiben werden im transparenten Zustand die vorstehend erwähnten Corona- und gegebenenfalls Regenbogeneffekte in gleicher Weise beobachtet.

WO 2016/008375 A1 betrifft eine schaltbare Glasstruktur, bei der zwischen einem ersten Glas und einem zweiten Glas eine PDLC-Schicht angeordnet ist, die eine Polymerschicht und darin dispergierte Flüssigkristallmikrokugeln umfasst, wobei das erste und/oder zweite Glas mit einer Strahlenschutzbeschichtung versehen ist.

DE 102013214249 A1 beschreibt die Herstellung eines Folienverbunds, bei dem es sich um eine PDLC-Folie oder eine SPD-Folie handeln kann.

DE 202013006516 U1 betrifft ein System mit einer zwischen zwei Elektroden befindlichen PDLC-Schicht, die eine Flüssigkristallmischung enthält, die in einer Polymermatrix dispergierte Mikrotröpfchen formt, wobei der Massenanteil der Flüssigkristallmischung zwischen 40 und 70% liegt, die PDLC-Schicht eine Dicke zwischen 5 und 25 µm hat und der mittlere Durchmesser der in der Polymermatrix dispergierten Flüssigkristalltröpfchen zwischen 0,25 µm und 2,00 µm liegt.

Der Erfindung liegt daher die Aufgabe zu Grunde, eine Fahrzeugscheibe der eingangs genannten Art mit einer PDLC-Schicht oder einer SPD-Schicht bereitzustellen, die einen abgeschwächten Coronaeffekt und gegebenenfalls auch einen abgeschwächten Regenbogeneffekt zeigt oder bei der diese Effekte weitgehend beseitigt sind.

Erfindungsgemäß wird diese Aufgabe durch eine Fahrzeugscheibe nach Anspruch 1 gelöst. Die Erfindung betrifft gemäß den weiteren unabhängigen Ansprüchen auch ein Fahrzeug, dass eine solche Scheibe umfasst, und die Verwendung der erfindungsgemäßen Scheibe als Fahrzeugscheibe. Bevorzugte Ausgestaltungen der Erfindung sind in den abhängigen Ansprüchen wiedergegeben.

Die Erfindung betrifft somit eine Fahrzeugscheibe, die in dieser Reihenfolge umfasst:
1. a. eine erste Glasscheibe (1),
2. b. eine oder mehrere Polymerschichten (2),
3. c. eine PDLC-Schicht (4), umfassend eine Polymermatrix (9), in die Flüssigkristalltröpfchen (8) eingebettet sind, wobei auf den beiden Seiten der PDLC-Schicht jeweils eine elektrisch leitfähige Schicht (3, 5) angeordnet ist, oder eine SPD-Schicht, umfassend eine Polymermatrix, in der Suspensionströpfchen, in denen Licht polarisierende Teilchen suspendiert sind, eingebettet sind, wobei auf den beiden Seiten der SPD-Schicht jeweils eine elektrisch leitfähige Schicht angeordnet ist,
4. d. eine oder mehrere Polymerschichten (6) und
5. e. eine zweite Glasscheibe (7),
dadurch gekennzeichnet, dass, im Fall der PDLC-Schicht, die Flüssigkristalltröpfchen oder, im Fall der SPD-Schicht, die Suspensionströpfchen eine durchschnittliche Größe von mehr als 2 µm aufweisen. Erfindungsgemäß weisen, im Fall der PDLC-Schicht, die Flüssigkristalltröpfchen oder, im Fall der SPD-Schicht, die Suspensionströpfchen eine durchschnittliche Größe von mehr als 2 µm mit einer relativen Standardabweichung von mehr als 30% auf.

Die erfindungsgemäße Fahrzeugscheibe zeigt gegenüber PDLC-Schichten oder SPD-Schichten enthaltenden Fahrzeugscheiben nach dem Stand der Technik einen deutlich abgeschwächten Coronaeffekt. Die Größe bzw. der Durchmesser der Corona ist deutlich verringert. Die optische Qualität der Scheiben wird verbessert. Störende Effekte für die Fahrzeuginsassen werden dadurch vermieden oder zumindest verringert.

Da die Flüssigkristalltröpfchen oder Suspensionströpfchen eine durchschnittliche Größe von mehr als 2 µm mit einer relativen Standardabweichung von mehr als 30% aufweisen, nimmt auch der Kontrast zwischen den Farben in der Corona und im Regenbogenbereich deutlich ab und die Farben verblassen (Regenbogeneffekt). Dies verbessert die optische Qualität der Scheiben noch weiter.

Durch die Einstellung der Größe der Flüssigkristalltröpfchen oder Suspensionströpfchen in einem größeren Bereich verringert sich die Größe der Corona. Durch den Einsatz von Flüssigkristalltröpfchen oder Suspensionströpfchen mit einer recht großen Standardabweichung, also einer inhomogenen Teilchengrößenverteilung, verringert sich der Kontrast zwischen den Farben in der Corona, so dass die Farben verblassen und gegebenenfalls völlig verschwinden.

Die Erfindung wird im Folgenden und anhand der beigefügten Figuren erläutert. In diesen zeigt:
- Fig. 1: eine schematische Darstellung einer erfindungsgemäßen Fahrzeugscheibe mit PDLC-Schicht;
- Fig. 2a-b: eine schematische Darstellung einer Fahrzeugscheibe mit PDLC-Schicht im trüben bzw. opaken Zustand (Fig. 2a) und im transparenten Zustand (Fig. 2b);
- Fig. 3a-d: Fotographien der Sonne durch nicht erfindungsgemäße Fahrzeugscheiben (Fig. 3a-c) und eine erfindungsgemäße Fahrzeugscheibe (Fig. 3d);
- Fig. 4: eine schematische Darstellung der Mikrostruktur einer PDLC-Schicht im Querschnitt;
- Fig. 5: eine schematische Darstellung der Mikrostruktur einer anderen PDLC-Schicht im Querschnitt;
- Fig. 6a-b: eine schematische Darstellung des Corona- und des Regenbogeneffekts.

Die erfindungsgemäßen Fahrzeugscheiben bzw. die PDLC-Schicht oder SPD-Schicht sind reversibel zwischen einem transparenten Zustand und einem trüben oder opaken Zustand umschaltbar, d.h. die Lichtstreuung der Scheibe kann variabel eingestellt werden. Hierfür wird die Fahrzeugscheibe über die elektrisch leitfähigen Schichten mit einer ein- und ausschaltbaren Spannungsquelle verbunden.

Bei dem trüben oder opaken Zustand ist die Lichtdurchlässigkeit reduziert, so dass die Fahrzeugscheibe opak, d.h. undurchsichtig, oder trübe, d.h. vermindert durchsichtig, wird.

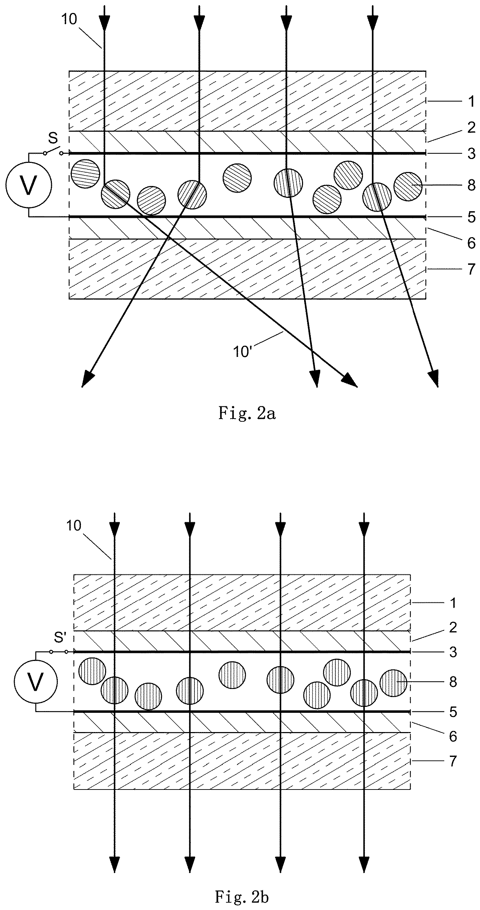

Wird durch Einschalten der Spannungsquelle ein elektrisches Feld angelegt, so richten sich die Flüssigkristalltröpfchen der PDLC-Schicht bzw. die Suspensionströpfchen der SPD-Schicht aus und die PDLC-Schicht bzw. SPD-Schicht wird transparent, also durchsichtig. Wird die Spannungsquelle abgeschaltet, so dass kein elektrisches Feld vorhanden ist, sind die Flüssigkristalltröpfchen der PDLC-Schicht bzw. die Suspensionströpfchen nicht gleichartig ausgerichtet, das Licht wird gestreut und die PDLC-Schicht bzw. SPD-Schicht ist trübe oder opak. Der Vorgang ist reversibel. Das Prinzip wird anhand der Fig. 2a-b nachstehend weiter erläutert.

Fensterscheiben, welche eine PDLC-Schicht (PDLC = polymer dispersed liquid crystal) oder eine SPD-Schicht (SPD = suspended particle device) aufweisen und reversibel zwischen einem transparenten Zustand und einem trüben oder opaken Zustand umschaltbar sind, sind bekannt.

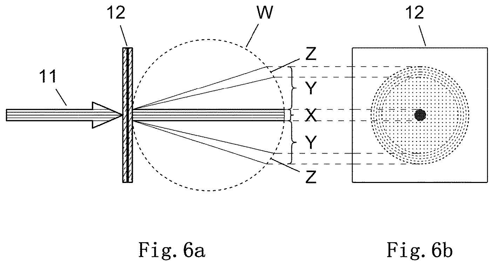

Der vorstehend beschriebene Coronaeffekt bei PDLC- und SPD-Schichten beim Betrachten einer Lichtquelle wie der Sonne durch die Scheibe entsteht durch eine Streuung des Lichts an den Flüssigkristalltröpfchen bzw. Suspensionströpfchen in der Fensterscheibe. In Fig. 6 ist der Effekt schematisch dargestellt. Ein ähnlicher Effekt ist auch in der Meteorologie bekannt, wenn Sonnen- oder Mondlicht von Wassertröpfchen in Wolken gestreut wird.

Die erfindungsgemäße Fahrzeugscheibe weist eine PDLC-Schicht oder eine SPD-Schicht auf. Die PDLC-Schicht umfasst oder ist eine Polymermatrix, in die Flüssigkristalltröpfchen eingebettet sind, wobei die Flüssigkristalltröpfchen eine durchschnittliche Größe von mehr als 2 µm aufweisen, wobei die relative Standardabweichung der durchschnittlichen Größe mehr als 30% beträgt. Bei den Flüssigkristalltröpfchen handelt es sich um flüssige Tröpfchen von einer oder mehreren Flüssigkristallverbindungen. Die SPD-Schicht umfasst oder ist eine Polymermatrix, in der Suspensionströpfchen, in denen Licht polarisierende Teilchen suspendiert sind, eingebettet sind, wobei die Suspensionströpfchen eine durchschnittliche Größe von mehr als 2 µm aufweisen, wobei die relative Standardabweichung der durchschnittlichen Größe mehr als 30% beträgt. Bei den Suspensionströpfchen handelt es sich um Tröpfchen einer Suspensionsflüssigkeit, in die Licht polarisierende Partikel suspendiert sind.

Die durchschnittliche Größe der Flüssigkristalltröpfchen oder der Suspensionströpfchen kann z.B. bis zu 30 µm betragen, beträgt aber bevorzugt nicht mehr als 12 µm. In einer bevorzugten Ausführungsform beträgt die durchschnittliche Größe der Flüssigkristalltröpfchen oder der Suspensionströpfchen 3 bis 10 µm, bevorzugter 4 bis 8 µm. Dies ist bezüglich einer weiter verringerten Corona von Vorteil. Die relative Standardabweichung der durchschnittlichen Größe der Flüssigkristalltröpfchen oder der Suspensionströpfchen beträgt bevorzugt mehr als 30% und nicht mehr als 80%.

Die durchschnittliche Größe bezieht sich hier auf den arithmetischen Mittelwert. Die relative Standardabweichung als Maß für die Tröpfchengrößenverteilung ist hier wie üblich der in Prozent angegebene Quotient aus Standardabweichung des arithmetischen Mittelwerts und dem arithmetischen Mittelwert. Die relative Standardabweichung wird auch als Variationskoeffizient bezeichnet.

Die durchschnittliche Größe und die Standardabweichung der Flüssigkristalltröpfchen in der PDLC-Schicht bzw. der Suspensionströpfchen in der SPD-Schicht sind hier die durchschnittliche Größe und Standardabweichung, die durch Messen der Durchmesser von mindestens 50 Flüssigkristalltröpfchen bzw. Suspensionströpfchen in einer Rasterelektronenmikroskop (REM)-Aufnahme von einem Querschnitt der PDLC-Schicht bzw. der SPD-Schicht und durch Berechnen des arithmetischen Mittels der an der Aufnahme gemessenen Durchmesser und der Standardabweichung bestimmt wird. Wenn die Tröpfchen in der Aufnahme nicht kugelförmig sind, wird der Hauptachsendurchmesser (größter Durchmesser) gewählt. Anzumerken ist, dass die Flüssigkristalltröpfchen bzw. Suspensionströpfchen mesogene Flüssigkeiten sind, die beim Erstellen der Querschnitte der PDLC-Schicht bzw. der SPD-Schicht aus der Polymermatrix auslaufen, so dass tatsächlich die in der Polymermatrix verbleibenden Hohlräume vermessen werden, die der Form und Größe der ausgelaufenen Tröpfchen entsprechen.

Die Flüssigkristalltröpfchen der PDLC-Schicht können eine oder mehrere Flüssigkristall-Verbindungen enthalten. Es können übliche Flüssigkristalle eingesetzt werden. Es gibt eine Reihe von unterschiedlichen Systemen, die im Handel erhältlich sind. Beispiele für geeignete Flüssigkristalle sind z.B. in EP 0 564 869 A1 und EP 0 598 086 A1 beschrieben. Ebenfalls geeignet ist z.B. das von der Firma Merck unter der Bezeichnung MDA-00-3506 vertriebene Produkt, das eine Mischung von 4-((4-Ethyl-2,6-difluorphenyl)-ethinyl)-4'-propylbiphenyl und von 2-Fluor-4,4'-bis-(trans-4-propylcyclohexyl)-biphenyl enthält. In einer bevorzugten Ausführungsform sind die Flüssigkristalltröpfchen bei Umgebungstemperatur (23°C) nematisch. Gegebenenfalls weisen sie ferner eine positive dielektrische Anisotropie auf.

In einer bevorzugten Ausführungsform beträgt der Anteil an Flüssigkristalltröpfchen in der PDLC-Schicht, bezogen auf die Gesamtmasse an Flüssigkristalltröpfchen und Polymer der Polymermatrix, 40-70 Gew.-%, bevorzugter 50-70 Gew.-%. Neben den Flüssigkristalltröpfchen und der Polymermatrix kann die PDLC-Schicht weitere Bestandteile enthalten, z.B. Abstandshalter aus einem nichtleitenden Material aus Glas oder Kunststoff. Die Abstandshalter sind bevorzugt transparent.

Die Suspensionströpfchen der SPD-Schicht umfassen Tröpfchen einer flüssigen Suspension, in denen Licht polarisierende Partikel suspendiert sind. Solche Systeme werden z.B. in der EP 0551138 A1 beschrieben.

Die folgenden Angaben zur Polymermatrix gelten sowohl für die Polymermatrix der PDLC-Schicht als auch für die Polymermatrix der SPD-Schicht, sofern nicht anders angegeben. Die Polymermatrix ist bevorzugt transparent. Die Polymermatrix wird bevorzugt durch thermische Polymerisation oder Photopolymerisation erhalten. Die Polymermatrix kann z.B. aus einem Polymer von einem oder mehreren Vinyl- oder (Meth)acrylat-Monomeren und gegebenenfalls Vinyl- oder (Meth)acrylat-Oligomeren, einem Epoxidharz oder einem Urethanharz gebildet sein. Die Polymermatrix ist bevorzugt eine (Meth)acrylat-Polymermatrix. (Meth)acrylat steht für Acrylat und/oder Methacrylat. Beispiele für Vinyl- oder (Meth)acrylat-Monomere und Oligomere davon sind Mono(meth)acrylate, Di(meth)acrylate, N-substituierte Acrylamide, N-Vinylpyrrolidone, Styrol und seine Derivate, Vinylchlorid, Polyester(meth)acrylate, Epoxy(meth)acrylate, Polyurethan(meth)acrylate und Polyether(meth)acrylate.

Vorzugsweise ist die Polymermatrix das Polymer von mindestens einer monofunktionellen Vinylverbindung, vorzugsweise eines Acrylatmonomers oder eines Methacrylatmonomers, mindestens einer difunktionellen Vinylverbindung, vorzugsweise eines Diacrylatmonomers oder eines Dimethacrylatmonomers, und gegebenenfalls mindestens eines mono-, di- oder polyfunktionellen Vinyloligomers, vorzugsweise eines Acrylatoligomers oder eines Methacrylatoligomers.

Eine geeignete Monomermischung zur Herstellung der Polymermatrix umfasst z.B. 30-95 Gew.-% mindestens eines monofunktionellen (Meth)acrylat-Monomers, 1-60 Gew.-% mindestens eines difunktionellen (Meth)acrylat-Monomers und 1-50 Gew.-% mindestens eines mono-, di- oder polyfunktionellen (Meth)acrylatOligomers, bezogen auf das Gesamtgewicht der Monomere und Oligomere.

Verschiedene Techniken sind entwickelt worden, um eine PDLC-Schicht mit einer Polymermatrix mit darin eingebetteten Flüssigkristalltröpfchen zu erhalten, die in Abhängigkeit von den eingesetzten Materialien verwendet werden. Zu diesen Techniken gehören thermisch induzierte Phasentrennung (TIPS), Lösungsmittel-induzierte Phasentrennung (SIPS) und Polymerisations-induzierte Phasentrennung (PIPS). Bei der PIPS kann die Polymerisation thermisch oder photochemisch, z.B. durch UV-Strahlung, induziert werden. PIPS ist im allgemeinen die bevorzugte Technik.

Wenn ein Polymer-Vorstufenmaterial wie die vorstehend genannten Monomere, Oligomere oder Harze mit einer Flüssigkristallverbindung mischbar ist, kann die Polymerisations-induzierte Phasentrennung (PIPS) verwendet werden. Nach homogener Mischung von Flüssigkristall und Polymer-Vorstufenmaterial wird die Polymerisation initiiert, um die Phasentrennung zu induzieren. Bei der Polymerisation nimmt die Löslichkeit des Flüssigkristalls in dem wachsenden Polymernetzwerk ab, bis sich wachsende Flüssigkristalltröpfchen in der sich bildenden Matrix bilden und das Polymer zu gelieren beginnt. Tröpfchengröße, die Größenverteilung und die Morphologie der Tröpfchen werden während der Zeit zwischen der Tröpfchenbildung und dem Gelieren des Polymers bestimmt. Wichtige Faktoren sind die Polymerisationsrate, die relativen Konzentrationen von Materialien, die Temperatur, die Typen an Flüssigkristall und verwendeten Polymere und verschiedene andere physikalische Parameter, wie etwa Viskosität, Löslichkeit des Flüssigkristalls in dem Polymer.

Die thermisch induzierte Phasentrennung (TIPS) kann für Flüssigkristallmaterialien und thermoplastische Materialien verwendet werden, die in der Lage sind, eine homogene Lösung oberhalb der Schmelztemperatur des Polymers zu bilden. Die homogene Lösung des Flüssigkristalls in der thermoplastischen Schmelze wird unterhalb des Schmelzpunkts des thermoplastischen Materials gekühlt, wodurch eine Phasentrennung des Flüssigkristalls bewirkt wird. Die Tröpfchengröße und Verteilung des Flüssigkristalls kann z.B. durch die Kühlrate und Material-Parameter eingestellt werden.

Bei der Lösungsmittel-induzierte Phasentrennung (SIPS) werden Flüssigkristall und ein thermoplastisches Material in einem Lösungsmittel gelöst. Die darauffolgende Verdampfung des Lösungsmittels führt zu einer Phasentrennung des Flüssigkristalls, Tröpfchenbildung und Wachstum und Polymer-Gelierung.

Die PDLC-Schicht kann z.B. eine Dicke von 5 bis 40 µm, bevorzugt von 10 bis 25 µm aufweisen. Die SPD-Schicht kann z.B. eine Dicke von 50 bis 150 µm, bevorzugt von 80 bis 110 µm aufweisen.

Die folgenden Angaben zur elektrisch leitfähigen Schicht gelten sowohl für die elektrisch leitfähigen Schichten, die auf beiden Seiten der PDLC-Schicht angeordnet sind, als auch für die, die auf beiden Seiten der SPD-Schicht angeordnet sind, sofern nicht anders angegeben. Die elektrisch leitfähigen Schichten sind bevorzugt transparent. Die elektrisch leitfähigen Schichten bilden Elektroden, die mit der PDLC-Schicht bzw. der SPD-Schicht in Kontakt sind und in der erfindungsgemäßen Scheibe so konfiguriert sind, dass sie mit einer Spannungsquelle verbunden werden können.

Die elektrisch leitende Schicht kann transparente, leitende Oxide (TCO) enthalten, also Materialien, die sowohl gut leitend als auch im sichtbaren Licht transparent sind. Beispiele sind mit Zinn dotiertes Indiumoxid (ITO), mit Antimon oder Fluor dotiertes Zinnoxid (SnO₂:F) oder mit Aluminium dotierte Zinkoxid (ZnO: Al), wobei ITO bevorzugt ist. Eine elektrisch leitende Schicht auf der Basis von ITO kann z.B. einen Oberflächenwiderstand von 50 bis 200 Ohm pro Quadrat aufweisen.

Die Dicke der elektrisch leitenden Schichten auf Basis dieser transparenten leitenden Oxide (TCO) liegt bevorzugt im Bereich von 50 bis 100 nm. Bekannte Beschichtungstechniken sind z.B. durch ein Magnetfeld unterstützte Kathodenzerstäubung, Verdunstung, Sol-Gel-Verfahren oder Gasphasenabscheidung (CVD).

Die elektrisch leitende Schicht kann auch eine Metallschicht sein, vorzugsweise eine Dünnschicht oder ein Stapel von Dünnschichten. Geeignete Metalle sind z.B. Ag, Al, Pd, Cu, Pd, Pt In, Mo, Au. Diese Metallbeschichtungen werden als TCC (transparent conductive coating) bezeichnet. Typische Dicken der Einzelschichten liegen im Bereich von 2 bis 50 nm.

Eine große Vielfalt an PDLC-Schichten und SPD-Schichten, die jeweils elektrisch leitende Schichten auf der Oberseite und Unterseite aufweisen, ist im Handel erhältlich. In der Regel sind die beiden elektrisch leitenden Schichten der PDLC-Schicht und der SPD-Schicht auf einem Substrat bestehend aus Polymerfolien aufgebracht. Bei den Polymerfolien kann es sich z.B. um Polyesterfolien, bevorzugt Polyethylenterephthalat (PET)-Folien, handeln. Ein solcher Verbund kann für den Einbau in die erfindungsgemäße Fahrzeugscheibe eingesetzt werden.

Die erfindungsgemäße Fahrzeugscheibe ist eine Verbundglasscheibe, in die die PDLC-Schicht bzw. die SPD-Schicht als funktionelle Schicht enthalten ist. Daneben umfasst die Fahrzeugscheibe eine erste und eine zweite Glasscheibe, die durch eine oder mehrere Polymerfolien auf beiden Seiten der funktionellen Schicht zu einem festen Verbund laminiert sind.

Die erste Glasscheibe und die zweite Glasscheibe können aus dem gleichen Material oder aus verschiedenem Material sein. Die Scheiben können aus anorganischem Glas und/oder organischem Glas (Polymere) sein. In einer bevorzugten Ausführungsform enthält die erste Glasscheibe und/oder die zweite Glasscheibe Glas und/oder Polymere, bevorzugt Flachglas, Quarzglas, Borosilikatglas, Kalk-Natron-Glas, Alkalialuminosilikatglas, Polycarbonat und/oder Polymethacrylat.

Die erste Glasscheibe und die zweite Glasscheibe können die gleiche Dicke oder unterschiedliche Dicken aufweisen. Bevorzugt weisen die erste Glasscheibe und die zweite Glasscheibe unabhängig voneinander eine Dicke im Bereich von 0,4 bis 4,0 mm, z.B. 0,4 bis 3,85 mm, bevorzugter 1,6 bis 2,5 mm, auf. Aus mechanischen Gründen ist die Außenscheibe bevorzugt dicker oder gleich dick wie die innere Scheibe. Die Innenscheibe ist die Glasscheibe, die beim Einbau in das Fahrzeug zum Innenraum des Fahrzeugs zeigt, während die Außenscheibe nach außen zeigt.

Zwischen erster Glasscheibe und PDLC-Schicht bzw. SPD-Schicht und zwischen zweiter Glasscheibe und PDLC-Schicht bzw. SPD-Schicht befinden sich je eine oder mehrere Polymerschichten. Die folgenden Angaben beziehen sich unabhängig voneinander auf alle diese eine oder mehrere Polymerschichten, sofern nicht anders angegeben. In der Regel werden als Ausgangsmaterial zur Bildung der Polymerschichten entsprechende handelsübliche Polymerfolien eingesetzt. Vorzugsweise enthält mindestens eine der einen oder mehreren Polymerschichten ein thermoplastisches Polymer. Die eine oder mehrere Polymerschichten sind bevorzugt transparent, farblos oder getönt.

Die eine oder mehreren Polymerschichten können als Laminierschicht z.B. Polyvinylbutyral, Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten.

Vorzugsweise enthält mindestens eine der einen oder mehreren Polymerschichten als Laminierschicht Polyvinylbutyral (PVB), Ethylenvinylacetat, Polyurethan, und/oder Gemische davon und/oder Copolymere davon, wobei Polyvinylbutyral bevorzugt ist.

Die eine oder mehreren Polymerschichten können neben den vorstehend genannten polymeren Laminierschichten gegebenenfalls zusätzliche Polymerschichten mit anderer Funktion enthalten, z.B. als Schutzschicht für die PDLC-Schicht bzw. SPD-Schicht mit den darüber und darunter angeordneten elektrisch leitenden Schichten. Die Schutzschicht kann z.B. eine Polyesterschicht, bevorzugt eine Polyethylenterephthalat (PET)-Schicht, sein. Weitere Beispiele für Polymerschichten für bestimmte Funktionen sind getönte PVB-Folien, Akustikfolien und IR-reflektierende PET-Folien bzw. die daraus gebildeten Schichten. Sofern neben der oder den Laminierschichten weitere Polymerschichten enthalten sind, sind die Polymerschichten, die am nächsten zur ersten und zweiten Glasscheibe angeordnet sind, im allgemeinen polymere Laminierschichten.

Die eine oder mehreren Polymerschichten weisen z.B. jeweils eine Dicke von 0,04 bis 1,5 mm, bevorzugt 0,1 bis 1,5 mm, bevorzugter von 0,3 bis 0,9 mm auf, typischerweise 0,38 mm, 0,76 mm oder 0,85 mm. Die Dicke der Schichten kann je nach Verwendungszweck variieren. In einigen Ausführungsformen können z.B. PET-Schichten mit einer Dicke von 0,05 mm und/oder Akustik-Folien mit einer Dicke von 0,85 mm eingesetzt werden. Die als Laminierschichten eingesetzten Polymerschichten weisen bevorzugt eine Dicke von 0,1 bis 1,5 mm, bevorzugter von 0,3 bis 0,9 mm, auf.

In einer bevorzugten Ausführungsform umfasst die Fahrzeugscheibe in dieser Reihenfolge die erste Glasscheibe, mindestens eine Laminierschicht als erste Polymerschicht, z.B. eine PVB-Schicht, mindestens eine Schutzschicht als zweite Polymerschicht, die PDLC-Schicht mit den beiden elektrisch leitfähigen Schichten auf der Unter- und Oberseite oder die SPD-Schicht mit den beiden elektrisch leitfähigen Schichten auf der Unter- und Oberseite, mindestens eine Schutzschicht als zweite Polymerschicht, mindestens eine Laminierschicht als erste Polymerschicht, z.B. eine PVB-Schicht, und die zweite Glasscheibe.

In einer Ausführungsform kann die Fahrzeugscheibe getönt sein und/oder mindestens ein beschichtetes Glas als erste und/oder zweite Glasscheibe umfassen. Dadurch können die optischen Eigenschaften der Fahrzeugscheibe modifiziert werden. Eine getönte Fahrzeugscheibe kann durch Einsatz getönter Glasscheiben und/oder getönter Polymerschichten erhalten werden. In der erfindungsgemäßen Fahrzeugscheibe ist dann mindestens eine Glasscheibe ausgewählt aus der ersten und zweiten Glasscheibe eine getönte Glasscheibe und/oder mindestens eine Polymerschicht ausgewählt aus der einen oder den mehreren Polymerschichten zwischen der ersten Glasscheibe und der PDLC-Schicht oder SPD-Schicht und der einen oder den mehreren Polymerschichten zwischen der zweiten Glasscheibe und der PDLC-Schicht oder SPD-Schicht eine getönte Polymerschicht. Für getönte Polymerschichten können z.B. getönte PVB-Folien und/oder IR-reflektierende PET-Folien verwendet werden. Ein Beispiel für beschichtetes Glas ist Low-E-Glas (Low-Emissivity-Glas) oder Glas mit einer IR-reflektierenden Beschichtung. Low-E-Gläser sind im Handel erhältlich und mit einer oder mehreren Metallschichten beschichtet.

Die Metallbeschichtung ist sehr dünn, z.B. weist sie eine Dicke von etwa 100 nm auf. Bei Einsatz einer beschichteten Glasscheibe als erster und/oder zweiter Glasscheibe befindet sich die Beschichtung vorzugsweise auf der Innenseite der Glasscheibe relativ zur Fahrzeugscheibe.

Es versteht sich, dass bei einer getönten Fahrzeugscheibe die Scheibe im transparenten Zustand der PDLC-Schicht bzw. SPD-Schicht getönt ist.

In einer bevorzugten Ausführungsform ist die PDLC-Schicht bzw. die SPD-Schicht seitlich mit einer Klebedichtmasse und/oder einen Thermoplaststreifen abgedichtet. Vorteilhaft ist, dass die Klebedichtmasse und/oder der Thermoplaststreifen die PDLC-Schicht bzw. die SPD-Schicht vor Korrosion schützt. Es versteht sich, dass seitlich sich auf die Seitenflächen der PDLC- bzw. SPD-Schicht im Gegensatz zu der Ober- und Unterseite der PDLC- bzw. SPD-Schicht bezieht.

Die Klebedichtmasse kann z.B. ein Polyvinylbutyral (PVB)-Klebedichtmasse und/oder in Form eines Bilderrahmens ausgearbeitet sein. Bei der Bilderrahmentechnik reicht die PDLC-Schicht bzw. die SPD-Schicht nicht bis zum Rand der Fahrzeugscheibe, d.h. sie ist flächenmäßig kleiner als die erste und zweite Glasscheibe und die Polymerschichten. Der freibleibende Rand wird umlaufend durch die Klebdichtmasse versiegelt, die dieselbe Dicke wie die PDLC-Schicht bzw. SPD-Schicht aufweist und so auch als Spacer fungiert. Auf diese Weise ist die PDLC-Schicht bzw. SPD-Schicht seitlich von der Klebedichtmasse umrahmt.

Bei dem Thermoplaststreifen handelt es sich um ein Band ohne Klebstoff, das umlaufend an den Seitenflächen der PDLC-Schicht bzw. SPD-Schicht U-förmig angebracht wird, so dass die Schenkel des Us auf der Ober- und Unterseite der PDLC-Schicht bzw. SPD-Schicht liegen.

Die erfindungsgemäße Fahrzeugscheibe eignet sich für alle Fahrzeuge, z.B. Kraftfahrzeuge, Züge, Schiffs- oder Luftfahrzeuge, wobei Kraftfahrzeuge besonders bevorzugt sind. Beispiele für geeignete Kraftfahrzeuge sind Busse, Traktoren, Lastkraftwagen und Personenkraftwagen, wobei Personenkraftwagen besonders bevorzugt sind.

Die Erfindung betrifft auch ein Fahrzeug, umfassend mindestens eine erfindungsgemäße Fahrzeugscheibe, wobei das Fahrzeug bevorzugt ein Kraftfahrzeug ist. Geeignete und bevorzugte Fahrzeuge sind vorstehend genannt. Die Erfindung betrifft ferner die Verwendung einer erfindungsgemäßen Scheibe als Fahrzeugscheibe, bevorzugt in einem Schiebedach, als Glasdach, als Heckscheibe, als Himmelkante im B-Feld eine Windschutzscheibe oder als vordere oder hintere Seitenscheibe, vorzugsweise in einem Kraftfahrzeug. Auch der Einsatz als Frontscheibe ist denkbar.

Die erfindungsgemäße Fahrzeugscheibe eignet sich zur Reduzierung des Coronaeffekts und gegebenenfalls des Regenbogeneffekts im transparenten Zustand der Fahrzeugscheibe, die sich ergeben können, wenn ein Betrachter durch die Scheibe in Richtung einer Lichtquelle wie der Sonne blickt.

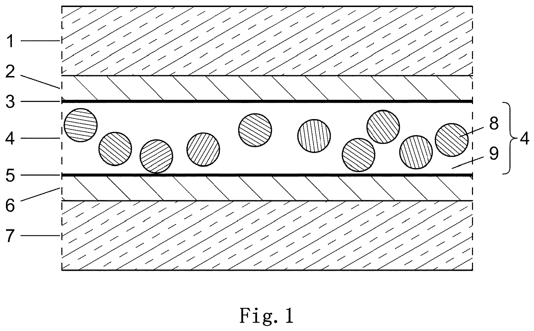

Die Erfindung wird nachfolgend anhand von nicht einschränkenden Ausführungsbeispielen unter Bezug auf die beigefügten Zeichnungen weiter erläutert. Fig. 1 und den Fig. 2a-b sind schematische Zeichnungen, was auch für die Wiedergabe der Flüssigkristalltröpfchen gilt, Größe und Größenverteilung der Tröpfchen sind nicht gezeigt.

Fig. 1 zeigt schematisch eine erfindungsgemäße Fahrzeugscheibe mit erster Glasscheibe 1, einer oder mehrerer Polymerschichten 2 und zwei elektrisch leitfähigen Schichten 3 und 5, welche auf den beiden Seiten der PDLC-Schicht 4 angeordnet sind. Die PDLC-Schicht 4 umfasst eine Polymermatrix 9, in die Flüssigkristalltröpfchen 8 eingebettet sind. Zwischen der elektrisch leitfähigen Schicht 5 und der zweiten Glasscheibe 7, sind eine oder mehrere Polymerschichten 6 angeordnet. Bei der erfindungsgemäßen Ausführungsform weisen die Flüssigkristalltröpfchen 8 der PDLC-Schicht 4 eine durchschnittliche Größe von mehr als 2 µm auf, mit einer relativen Standardabweichung von mehr als 30%. Die einen oder mehreren Polymerschichten 2 und 6 können jeweils aus mindestens einer PVB-Folie als Laminierschicht, die der ersten bzw. zweiten Glasscheibe 1, 7 zugewandt ist, und mindestens einer Polyesterfolie als Schutzschicht, die der jeweiligen elektrisch leitfähigen Schicht 3, 5 zugewandt ist, bestehen. Insbesondere auf der Innenseite der ersten Glasschicht 1 und in den Polymerschichten 2 können sich weitere Funktionsschichten befinden, z.B. IR-reflektierende Schichten. Die elektrisch leitfähigen Schichten 3, 5 können transparente ITO-Beschichtungen sein. Eine erfindungsgemäße Fahrzeugscheibe mit einer SPD-Schicht weist den gleichen prinzipiellen Aufbau aus, außer dass die PDLC-Schicht 4 durch eine SPD-Schicht mit in der Polymermatrix eingebettete Suspensionströpfchen, in die Licht polarisierende Partikel suspendiert sind, enthält.

Fig. 2a und 2b zeigen die Funktionsweise der PDLC-Technik an einer Fahrzeugscheibe gemäß Fig. 1. Die Scheibe wird dabei über die beiden elektrisch leitfähigen Schichten 3 und 5 mit einer Spannungsquelle V verbunden. Mit Hilfe eines Schalters S/S' kann der Stromkreis geschlossen (ON-Modus, S') und geöffnet (OFF-Modus, S) werden. Im ON-Modus wird ein elektrisches Feld angelegt, die Flüssigkristalle 8 richten sich geordnet aus und einfallendes Licht 10 wird kaum gestreut, was zu einer transparenten PDLC-Schicht und transparenten Scheibe führt (Fig. 2b). Wenn der elektrische Strom abgeschaltet ist, sind die Flüssigkristalle 8 zufällig ausgerichtet, so dass einfallendes Licht 10 gestreut wird 10' und die PDLC-Schicht und die Scheibe opak bzw. undurchsichtig werden (Fig. 2a). Die Technik ist bei SPD-Schichten im Prinzip gleich, wobei dort die Suspensionströpfchen gleichmäßig oder willkürlich orientiert sind.

Die Fig. 1, 2a und 2b sind auch hinsichtlich der dargestellten Lichtbrechung rein schematisch. Die Theorie zur verschiedenen Brechung des Lichts ist wie folgt. Die Flüssigkristalltröpfchen bzw. die Suspensionströpfchen sind durch zwei verschiedene Brechungsindices ne (im ON-Modus, S') und n' (im OFF-Modus, S) charakterisiert. Licht wird gebrochen, wenn der Brechungsindex der umgebenden Polymermatrix np sich von dem Brechungsindex des Flüssigkristalltröpfchens bzw. des Suspensionströpfchens im OFF-Modus n' unterscheidet. Licht wird nicht gebrochen, wenn die Brechungsindices ne und np übereinstimmen. Im OFF-Modus sind die Tröpfchen zufällig ausgerichtet, der Brechungsindex n' unterscheidet sich von dem Brechungsindex np, das Licht wird gestreut und die Scheibe erscheint trüb oder opak. Die Flüssigkristallmoleküle passen sich am Rand der Flüssigkristalltröpfchen an. Im ON-Modus orientieren sich die Tröpfchen gleichmäßig entlang der Richtung des angelegten Feldes, wobei der Brechungsindex ne so gewählt wird, dass er mit dem Brechungsindex np etwa übereinstimmt, wodurch eine hohe Transmission des Lichts und damit Transmission gewährleistet wird.

Fig. 6a-b bilden eine schematische Darstellung einer Corona Y mit Regenbogen, also den Corona- und Regenbogeneffekt, und deren Zustandekommen ab. Gezeigt wird die Folgen der Sonneneinstrahlung 11 durch eine Fahrzeugscheibe mit PDLC-Schicht 12. Das Licht wird in der Fahrzeugscheibe gestreut, so dass der Betrachter nicht nur die Sonne im direkten Bereich X, sondern auch eine Corona Y einschließlich des farbigen Regenbogenbereichs Z wahrnimmt.

### Beispiele

Es wurden vier PDLC-Folien A, B, C und D für die Herstellung von Fahrzeugscheiben verwendet. Die hergestellten Fahrzeugscheiben wurden dann hinsichtlich des Coronaeffekts untersucht.

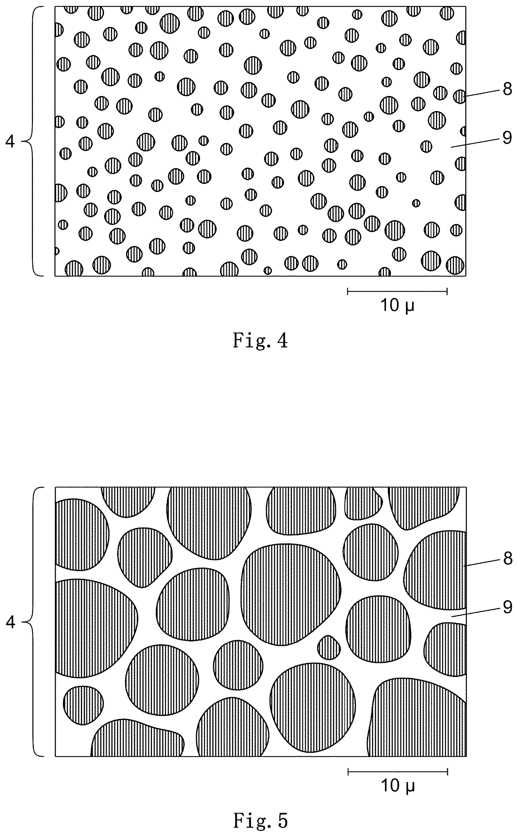

In der nachstehenden Tabelle sind Werte für durchschnittliche Größe der Flüssigkristalltröpfchen, Standardabweichung, relative Standardabweichung (Standardabweichung / durchschnittliche Größe in Prozent) und maximale Tröpfchengröße der PDLC-Folien A, B, C und D gezeigt, die an REM-Aufnahmen bestimmt wurden wie vorstehend beschrieben. Fig. 4 zeigt schematisch (nicht maßstabsgetreu) die Mikrostruktur der PDLC-Schicht 4, enthaltend Flüssigkristalltröpfchen 8 und Polymermatrix 9, der PDLC-Folie A. Fig. 5 zeigt schematisch (nicht maßstabsgetreu) die Mikrostruktur der PDLC-Schicht 4, enthaltend Flüssigkristalltröpfchen 8 und Polymermatrix 9, der PDLC-Folie D.

**Tabelle**

| PDLC-Folie | A | B | C | D |
|---|---|---|---|---|
| Durchschnittliche Größe Flüssiqkristalltröpfchen [µm] | 1,30 | 1,92 | 1,93 | 5,38 |
| Standardabweichung [µm] | 0,24 | 0,41 | 0,59 | 1,97 |
| Relative Standardabweichung [%] | 18 | 21 | 31 | 37 |
| Maximale Tröpfchengröße [µm] | 1,89 | 3,03 | 3,60 | 13,26 |

Mit den PDLC-Folien A, B, C und D wurden Fahrzeugscheiben hergestellt. Hierfür wurde Anordnungen gebildet, die in dieser Reihenfolge aus einer ersten Glasscheibe, einer PVB-Folie, der PDLC-Folie, einer PVB-Folie und einer zweiten Glasscheibe bestand. Diese Anordnungen wurden auf übliche Weise unter erhöhter Temperatur und erhöhtem Druck zu einem Verbundglas laminiert. Die Fahrzeugscheiben mit den PDLC-Folien A, B, C sind Vergleichsscheiben. Die Fahrzeugscheibe mit der PDLC-Folie D ist erfindungsgemäß.

Die Fahrzeugscheiben wurden auf den Coronaeffekt geprüft. Hierfür wurden die Fahrzeugscheiben über die elektrisch leitendenden Schichten (Elektroden) an eine Spannungsquelle angeschlossen. Alle Fahrzeugscheiben zeigten gute elektrooptische Eigenschaften mit einer zufriedenstellenden Opazität im OFF-Modus (Spannungsquelle aus) und Transparenz im ON-Modus (Spannungsquelle ein), wobei die erforderlich Spannung für den transparenten Zustand relativ gering war.

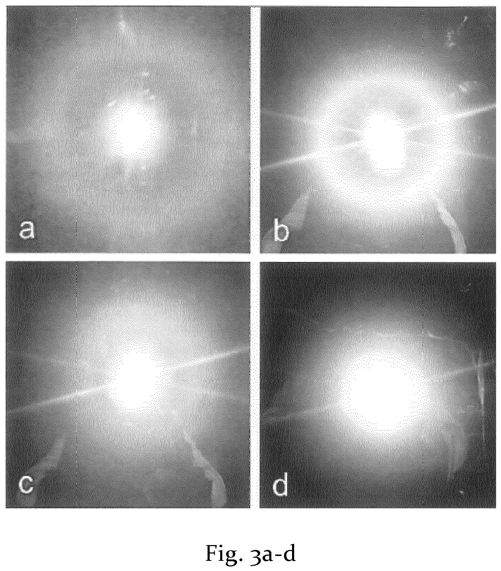

Zur Prüfung des Coronaeffekts wurde eine starke Lichtquelle auf einer Seite der Fahrzeugscheibe im transparenten Zustand positioniert. Von der anderen Seite der Scheibe wurde dann eine Fotografie der Lichtquelle durch die Scheibe aufgenommen. Die Aufnahmen sind in den Fig. 3a-d wiedergegeben.

Fig. 3a zeigt die Aufnahme für die Fahrzeugscheibe mit der PDLC-Folie A. Die Aufnahme zeigt einen sehr breiten, deutlich blauen Ring um die Lichtquelle.

Fig. 3b zeigt die Aufnahme für die Fahrzeugscheibe mit der PDLC-Folie B. Die Aufnahme zeigt einen breiten, blauen Ring um die Lichtquelle. Am Rand des Rings verblasst die Farbe und wechselt zu rötlich-braun (Regenbogeneffekt).

Fig. 3c zeigt die Aufnahme für die Fahrzeugscheibe mit der PDLC-Folie C. Die Aufnahme zeigt einen breiten, bläulichen Ring um die Lichtquelle. Im Vergleich zur Aufnahme der Fig. 3b ist die Breite der Corona etwa vergleichbar, die Farben sind aber weniger intensiv.

Fig. 3d zeigt die Aufnahme für die erfindungsgemäße Fahrzeugscheibe mit der PDLC-Folie D. Die Aufnahme zeigt einen kleinen weißen Ring um die Lichtquelle. Im Vergleich zu den Aufnahmen der Fig. 3a-c ist bei Fig. 3d die Breite der Corona signifikant kleiner. Darüber hinaus ist der Kontrast zwischen den Farben kaum bzw. praktisch nicht vorhanden, was zu einem weißen Ring führt.

Insgesamt ist festzustellen, dass bei der erfindungsgemäßen Fahrzeugscheibe der Coronaeffekt und zusätzlich der Regenbogeneffekt im Vergleich zu den Vergleichsscheiben deutlich schwächer ausgeprägt ist. Dadurch wird die optische Qualität der Scheibe verbessert.

### Bezugszeichenliste

- 1: erste Glasscheibe
- 2: eine oder mehrere Polymerschichten
- 3: elektrisch leitfähige Schicht
- 4: PDLC-Schicht bzw. SPD-Schicht
- 5: elektrisch leitfähige Schicht
- 6: eine oder mehrere Polymerschichten
- 7: zweite Glasscheibe
- 8: Flüssigkristalltröpfchen
- 9: Polymermatrix
- 10: einfallendes Licht
- 10': gestreutes Licht
- 11: Sonneneinstrahlung
- 12: Fahrzeugscheibe mit PDLC-Schicht
- S: Schalter (Stromkreis offen)
- S': Schalter (Stromkreis geschlossen)
- X: direkter Bereich
- Y: Corona
- Z: Regenbogenbereich
- V: Spannungsquelle

## Patentansprüche

1. Fahrzeugscheibe, umfassend in dieser Reihenfolge
a. eine erste Glasscheibe (1),
b. eine oder mehrere Polymerschichten (2),
c. eine PDLC-Schicht (4), umfassend eine Polymermatrix (9), in die Flüssigkristalltröpfchen (8) eingebettet sind, wobei auf den beiden Seiten der PDLC-Schicht jeweils eine elektrisch leitfähige Schicht (3, 5) angeordnet ist, oder eine SPD-Schicht, umfassend eine Polymermatrix, in der Suspensionströpfchen, in denen Licht polarisierende Teilchen suspendiert sind, eingebettet sind, wobei auf den beiden Seiten der SPD-Schicht jeweils eine elektrisch leitfähige Schicht angeordnet ist,
d. eine oder mehrere Polymerschichten (6) und
e. eine zweite Glasscheibe (7),
**dadurch gekennzeichnet, dass**, im Fall der PDLC-Schicht, die Flüssigkristalltröpfchen oder, im Fall der SPD-Schicht, die Suspensionströpfchen eine durchschnittliche Größe von mehr als 2 µm aufweisen, wobei die durchschnittliche Tröpfchengröße durch Messen der Durchmesser von mindestens 50 Flüssigkristalltröpfchen bzw. Suspensionströpfchen in einer Rasterelektronenmikroskop-Aufnahme von einem Querschnitt der PDLC-Schicht bzw. der SPD-Schicht und durch Berechnen des arithmetischen Mittels der an der Aufnahme gemessenen Durchmesser bestimmt wird,
wobei die relative Standardabweichung der durchschnittlichen Größe der Flüssigkristalltröpfchen oder der Suspensionströpfchen mehr als 30% beträgt.

2. Fahrzeugscheibe nach Anspruch 1, wobei die durchschnittliche Größe der Flüssigkristalltröpfchen oder der Suspensionströpfchen nicht mehr als 12 µm beträgt, wobei die durchschnittliche Größe der Flüssigkristalltröpfchen oder der Suspensionströpfchen bevorzugt 3 bis 10 µm beträgt.

3. Fahrzeugscheibe nach einem der Ansprüche 1 bis 2, wobei die relative Standardabweichung der durchschnittlichen Größe der Flüssigkristalltröpfchen oder der Suspensionströpfchen nicht mehr als 80% beträgt.

4. Fahrzeugscheibe nach einem der vorherigen Ansprüche, wobei die Flüssigkristalltröpfchen bei Umgebungstemperatur nematisch sind und eine positive dielektrische Anisotropie aufweisen.

5. Fahrzeugscheibe nach einem der vorherigen Ansprüche, wobei der Anteil an Flüssigkristalltröpfchen in der PDLC-Schicht, bezogen auf die Gesamtmasse an Flüssigkristalltröpfchen und Polymer der Polymermatrix, 40-70 Gew.-% beträgt.

6. Fahrzeugscheibe nach einem der vorherigen Ansprüche, wobei die Polymermatrix aus einem Polymer von einem oder mehreren Vinyl- oder (Meth)acrylat-Monomeren und gegebenenfalls Vinyl- oder (Meth)acrylat-Oligomeren, einem Epoxidharz oder einem Urethanharz gebildet ist.

7. Fahrzeugscheibe nach einem der vorherigen Ansprüche, wobei die Polymermatrix aus mindestens einer monofunktionellen Vinylverbindung, vorzugsweise eines (Meth)acrylatmonomers, mindestens einer difunktionellen Vinylverbindung, vorzugsweise eines Di(meth)acrylatmonomers, und gegebenenfalls mindestens eines mono-, di- oder polyfunktionellen Vinyloligomers, vorzugsweise eines (Meth)acrylatoligomers, gebildet ist.

8. Fahrzeugscheibe nach einem der vorherigen Ansprüche, wobei mindestens eine der einen oder mehreren Polymerschichten (2, 6)Polyvinylbutyral, Ethylenvinylacetat, Polyurethan und/oder Gemische davon und/oder Copolymere davon enthält, wobei Polyvinylbutyral bevorzugt ist.

9. Fahrzeugscheibe nach einem der vorherigen Ansprüche, wobei die Fahrzeugscheibe in dieser Reihenfolge die erste Glasscheibe (1), mindestens eine Laminierschicht als erste Polymerschicht (2), mindestens eine Schutzschicht als zweite Polymerschicht (2), die PDLC-Schicht (4) mit den beiden elektrisch leitfähigen Schichten (3, 5) oder die SPD-Schicht mit den beiden elektrisch leitfähigen Schichten, mindestens eine Schutzschicht als zweite Polymerschicht (6), mindestens eine Laminierschicht als erste Polymerschicht (6) und die zweite Glasscheibe (7) umfasst.

10. Fahrzeugscheibe nach einem der vorherigen Ansprüche, wobei die PDLC-Schicht oder die SPD-Schicht seitlich mit einer Klebedichtmasse und/oder einem Thermoplaststreifen abgedichtet ist.

11. Fahrzeugscheibe nach einem der vorherigen Ansprüche, wobei die Fahrzeugscheibe eine Kraftfahrzeugscheibe ist.

12. Fahrzeug, umfassend mindestens eine Fahrzeugscheibe nach einem der Ansprüche 1 bis 11, wobei das Fahrzeug bevorzugt ein Kraftfahrzeug ist.

13. Verwendung einer Scheibe nach einem der Ansprüche 1 bis 11 als Fahrzeugscheibe, bevorzugt in einem Schiebedach, als Glasdach, als Heckscheibe, als Himmelkante im B-Feld eine Windschutzscheibe oder als hintere oder vordere Seitenscheibe, vorzugsweise in einem Kraftfahrzeug.

14. Verwendung nach Anspruch 13 zur Verringerung des Coronaeffekts und gegebenenfalls zur Verringerung des Regenbogeneffekts im transparenten Zustand der Scheibe.

## Claims

1. Vehicle window pane, comprising, in this order:
a. a first glass pane (1),
b. one or a plurality of polymer layers (2),
c. a PDLC layer (4), comprising a polymer matrix (9) in which liquid crystal droplets (8) are embedded, wherein an electrically conductive layer (3, 5) is arranged in each case on both sides of the PDLC layer, or an SPD layer, comprising a polymer matrix in which suspension droplets are embedded, in which light-polarizing particles are suspended, wherein an electrically conductive layer is arranged in each case on both sides of the SPD layer,
d. one or a plurality of polymer layers (6), and
e. a second glass pane (7),
**characterized in that** in the case of the PDLC layer, the liquid crystal droplets or in the case of the SPD layer, the suspension droplets have an average size of more than 2 µm, wherein the average particle size is determined by measuring the diameter of at least 50 liquid crystal droplets or suspension droplets in a scanning electron microscope photo of a cross-section of the PDLC layer or the SPD layer and by calculation of the arithmetic mean of the diameters measured on the photo,
wherein the relative standard deviation of the average size of the liquid crystal droplets or of the suspension droplets is more than 30%.

2. Vehicle window pane according to claim 1, wherein the average size of the liquid crystal droplets or of the suspension droplets is not more than 12 µm, wherein the average size of the liquid crystal droplets or of the suspension droplets is preferably 3 to 10 µm.

3. Vehicle window pane according to one of claims 1 through 2, wherein the relative standard deviation of the average size of the liquid crystal droplets or of the suspension droplets is not more than 80%.

4. Vehicle window pane according to one of the preceding claims, wherein the liquid crystal droplets are nematic at ambient temperature and have positive dielectric anisotropy.

5. Vehicle window pane according to one of the preceding claims, wherein the proportion of liquid crystal droplets in the PDLC layer, based on the total mass of liquid crystal droplets and polymer of the polymer matrix, is 40-70 wt.-%.

6. Vehicle window pane according to one of the preceding claims, wherein the polymer matrix is formed from a polymer of one or a plurality of vinyl or (meth)acrylate monomers and, optionally, vinyl or (meth)acrylate oligomers, an epoxy resin, or a urethane resin.

7. Vehicle window pane according to one of the preceding claims, wherein the polymer matrix is formed from at least one monofunctional vinyl compound, preferably a (meth)acrylate monomer, at least one difunctional vinyl compound, preferably a di(meth)acrylate monomer, and, optionally, at least one mono-, di-, or polyfunctional vinyl oligomer, preferably a (meth)acrylate oligomer.

8. Vehicle window pane according to one of the preceding claims, wherein at least one of the one or a plurality of polymer layers (2, 6) contains polyvinyl butyral, ethylene vinyl acetate, polyurethane, and/or mixtures thereof and/or copolymers thereof, polyvinyl butyral being preferred.

9. Vehicle window pane according to one of the preceding claims, wherein the vehicle window pane comprises, in this order, the first glass pane (1), at least one laminating layer as a first polymer layer (2), at least one protective layer as a second polymer layer (2), the PDLC layer (4) with the two electrically conductive layers (3, 5) or the SPD layer with the two electrically conductive layers, at least one protective layer as a second polymer layer (6), at least one laminating layer as a first polymer layer (6), and the second glass pane (7).

10. Vehicle window pane according to one of the preceding claims, wherein the PDLC layer or the SPD layer is laterally sealed with an adhesive sealing compound and/or a thermoplastic strip.

11. Vehicle window pane according to one of the preceding claims, wherein the vehicle window pane is a motor vehicle window pane.

12. Vehicle, including at least one vehicle window pane according to one of claims 1 through 11, wherein the vehicle is preferably a motor vehicle.

13. Use of a pane according to one of claims 1 through 11 as a vehicle window pane, preferably in a sunroof, as a glass roof, as a rear window, as a roof edge in the B field of a windshield, or as a rear or front side window, preferably in a motor vehicle.

14. Use according to claim 13 for reducing the corona effect and, possibly, for reducing the rainbow effect in the transparent state of the pane.

## Revendications

1. Vitre du véhicule comprenant, dans l'ordre, les éléments suivants
a. une première vitre (1),
b. une ou plusieurs couches de polymère (2),
c. une couche PDLC (4), comprenant une matrice polymère (9) dans laquelle sont incorporées des gouttelettes de cristal liquide (8), dans laquelle une couche électriquement conductrice (3, 5) est arrangée dans chaque cas des deux côtés de la couche PDLC, ou une couche SPD, comprenant une matrice polymère dans laquelle sont incorporées des gouttelettes de suspension, dans lesquelles sont suspendues des particules polarisant la lumière, dans laquelle une couche électriquement conductrice est arrangée dans chaque cas des deux côtés de la couche SPD,
d. une ou plusieurs couches de polymère (6), et
e. une deuxième vitre (7),
**caractérisé en ce que**, dans le cas de la couche PDLC, les gouttelettes de cristaux liquides ou, dans le cas de la couche SPD, les gouttelettes de suspension ont une taille moyenne supérieure à 2 µm, la taille moyenne des particules étant déterminée par la mesure du diamètre d'au moins 50 gouttelettes de cristaux liquides ou gouttelettes de suspension sur une photo prise au microscope électronique à balayage d'une coupe transversale de la couche PDLC ou de la couche SPD et par le calcul de la moyenne arithmétique des diamètres mesurés sur la photo,
dans lequel l'écart-type relatif de la taille moyenne des gouttelettes de cristaux liquides ou des gouttelettes de suspension est supérieur à 30 %.

2. Vitre de véhicule selon la revendication 1, dans laquelle la taille moyenne des gouttelettes de cristaux liquides ou des gouttelettes de suspension est inférieure ou égale à 12 µm, la taille moyenne des gouttelettes de cristaux liquides ou des gouttelettes de suspension étant de préférence comprise entre 3 et 10 µm.

3. Vitre de véhicule selon l'une des revendications 1 à 2, dans laquelle l'écart-type relatif de la taille moyenne des gouttelettes de cristal liquide ou des gouttelettes de suspension n'est pas supérieur à 80 %.

4. Vitre de véhicule selon l'une des revendications précédentes, dans laquelle les gouttelettes de cristal liquide sont nématiques à température ambiante et présentent une anisotropie diélectrique positive.

5. Vitre de véhicule selon l'une des revendications précédentes, dans laquelle la proportion de gouttelettes de cristaux liquides dans la couche PDLC, sur la base de la masse totale des gouttelettes de cristaux liquides et du polymère de la matrice polymère, est de 40 à 70 % en poids.

6. Vitre de véhicule selon l'une des revendications précédentes, dans laquelle la matrice polymère est formée d'un polymère composé d'un ou de plusieurs monomères de vinyle ou de (méth)acrylate et, éventuellement, d'oligomères de vinyle ou de (méth)acrylate, d'une résine époxy ou d'une résine uréthane.

7. Vitre de véhicule selon l'une des revendications précédentes, dans laquelle la matrice polymère est formée d'au moins un composé vinylique monofonctionnel, de préférence un monomère (méth)acrylate, d'au moins un composé vinylique difonctionnel, de préférence un monomère di(méth)acrylate, et, éventuellement, d'au moins un oligomère vinylique mono-, di- ou polyfonctionnel, de préférence un oligomère (méth)acrylate.

8. Vitre de véhicule selon l'une des revendications précédentes, dans laquelle au moins une des couches de polymère (2, 6) contient du butyral de polyvinyle, de l'éthylène-acétate de vinyle, du polyuréthane, et/ou des mélanges de ceux-ci et/ou des copolymères de ceux-ci, le butyral de polyvinyle étant préféré.

9. Vitrage de véhicule selon l'une des revendications précédentes, dans lequel le vitrage de véhicule comprend, dans l'ordre, la première vitre (1), au moins une couche de stratification sous forme de première couche de polymère (2), au moins une couche de protection sous forme de deuxième couche de polymère (2), la couche PDLC (4) avec les deux couches conductrices d'électricité (3, 5) ou la couche SPD avec les deux couches conductrices d'électricité, au moins une couche de protection sous forme de deuxième couche de polymère (6), au moins une couche de feuilletage sous forme de première couche de polymère (6), et la deuxième vitre (7).

10. Vitre de véhicule selon l'une des revendications précédentes, dans laquelle la couche PDLC ou la couche SPD est scellée latéralement à l'aide d'un composé de scellement adhésif et/ou d'une bande thermoplastique.

11. Vitre de véhicule selon l'une des revendications précédentes, dans laquelle la vitre de véhicule est une vitre de véhicule automobile.

12. Véhicule, comprenant au moins une vitre de véhicule selon l'une des revendications 1 à 11, dans lequel le véhicule est de préférence un véhicule à moteur.

13. Utilisation d'une vitre selon l'une des revendications 1 à 11 comme vitre de véhicule, de préférence dans un toit ouvrant, un toit en verre, une lunette arrière, un bord de toit dans le champ B d'un pare-brise, ou une vitre latérale arrière ou avant, de préférence dans un véhicule automobile.

14. Utilisation selon la revendication 13 pour réduire l'effet corona et, éventuellement, pour réduire l'effet arc-en-ciel à l'état transparent de la vitre.
